# EUROPEAN PATENT APPLICATION

(11) **EP 4 202 786 A1**
(43) Date of publication of application: **28.06.2023**
(21) Application number: 22201179.3
(22) Date of filing: 12.10.2022
(51) Int. Cl.: G06N 3/094, G06F 21/54, G06F 21/57, G06N 3/084

(54) **ADVERSARIAL SAMPLE PROTECTION FOR MACHINE LEARNING**

(30) Priority: 23.12.2021 US 202117560976
(71) Applicant: INTEL Corporation, Santa Clara, CA 95054 (US)
(72) Inventor: LEVY, Dor, 7608641 Rehovot (IL); BEN-SHALOM, Omer, 75503 Rishon Le-Tzion (IL); KELLERMANN, Raizy, 9737144 Jerusalem (IL); NAYSHTUT, Alex, 80700 Gan Yavne (IL)
(74) Representative: Maiwald GmbH

(57) **Abstract**

Adversarial sample protection for machine learning is described. An example of a storage medium includes instructions for initiating processing of examples for training of an inference engine in a system; dynamically selecting a subset of defensive preprocessing methods from a repository of defensive preprocessing methods for a current iteration of processing, wherein a subset of defensive preprocessing methods is selected for each iteration of processing; performing training of the inference engine with a plurality of examples, wherein the training of the inference engine include operation of the selected subset of defensive preprocessing methods; and performing an inference operation with the inference engine, including utilizing the selected subset of preprocessing defenses for the current iteration of processing.

## Description

### FIELD

This disclosure relates generally to the field of electronic devices and, more particularly, to adversarial sample protection for machine learning.

### BACKGROUND

Machine learning (ML) has been successfully applied in many different domains. In particular, deep learning (DL) classifiers in inference models have proven to provide very successful results in technical areas such as autonomous or assisted driving.

However, deep learning classifiers may be attacked utilizing adversarial samples in which samples are designed to trick or spoof the classifier. Adversarial examples that introduce visually negligible perturbations to an original image can be easily crafted by an attacker having access to the inference model.

### BRIEF DESCRIPTION OF THE DRAWINGS

Embodiments described here are illustrated by way of example, and not by way of limitation, in the figures of the accompanying drawings in which like reference numerals refer to similar elements.
**FIG. 1A** illustrates an example of a machine learning classification system;
**FIG. 1B** illustrates an example of a machine learning classification system that is under an adversarial attack;
**FIG. 2** illustrates adversarial example generation through use of a replica model;
**FIG. 3** illustrates adversarial example generation through direct use of a targeted model;
**FIG. 4A** is an illustration of an apparatus or system to provide adversarial sample protection for machine learning, according to some embodiments;
**FIG. 4B** is an illustration of dynamic selector for apparatus or system to provide adversarial samples evasion for machine learning;
**FIG. 5** is flowchart to illustrate a process for adversarial sample protection for machine learning, according to some embodiments;
**FIG. 6A** is an illustration of a neural network that may be processed according to some embodiments;
**FIGS. 6B** **and** **6C** illustrate an example of a neural network that may be processed according to some embodiments; and
**FIG. 7** illustrates an embodiment of an exemplary computing architecture for adversarial sample protection for machine learning, according to some embodiments.

### DETAILED DESCRIPTION

Embodiments described herein are directed to adversarial sample protection for machine learning.

Deep learning (DL)-based classifiers provide powerful classification ability, and may be able to surpass human level classification on natural signals. However, despite the success of deep learning classifiers in many domains, classifiers are still susceptible to adversarial samples. Adversarial samples are samples that are particularly designed to trick the classifier, and thus result in failure of the classification operation.

Adversarial examples that introduce visually negligible perturbations to original images can be easily crafted by an attacker having a black-box access (i.e., external access, without knowledge of interior) to the inference model. In mission-critical systems, such as AI-based autonomous or assisted driving, the implications of a successful adversarial examples attack can be devastating.

Existing solutions to defend against adversarial sample attacks include:
-- Adversarial training in which the training data is augmented with adversarial examples, with the training examples being labeled correctly. For example, in autonomous or assisted driving, an adversarial example that may resemble a traffic control device (such as traffic sign or signal) is labeled in a manner to indicate that the adversarial samples are not traffic control devices. As used herein, an autonomous driving apparatus or system generally refers to a vehicle apparatus or system that is capable of sensing the environment and moving safely with little or no human input, while an assisted driving apparatus or system refers to a vehicle apparatus or system that is capable of sensing the environment and assisting a human driver in driving the vehicle. As used herein, a vehicle includes any propelled vehicle, with or without a driver of passengers, including, but not limited to, an automobile; a truck; an airplane, helicopter, drone, or other flying vehicle; a boat, ship, or other watercraft; or a train locomotive or other rail vehicle.
-- Re-encoding the inputs to a classifier, such as using JPEG (Joint Photographic Experts Group) compression and decompression (or other coding format) to remove some of the visually undetectable noise; adding noise to overcome the perturbations; or semantic re-encoding in which semantic features are extracted and used for classification (which may be referred to as feature squeezing).
-- In attacks that require white-box access to the model (referred to access to the internal elements of the model, also known as clear box and other similar terms) to compute the adversarial examples according to the model gradients, a simple defense strategy is to limit access to the gradients, intentionally or unintentionally.
-- Post processing of activations or feature maps or use of explainability techniques to find anomalies in the classification patterns that were activated or produced by the network, compared to those generated for natural inputs.

However, adversarial training and other related solutions are expensive processes that lengthen the machine learning model training process and require additional compute resources. Further, this can degrade the performance compared to classifiers trained on natural data sets. Similarly, input reencoding adds overhead to the inference system, while being ineffective in many cases as an attacker can often overcome the deployed mechanism. Further, obfuscated gradients have been shown to be ineffective and can be bypassed by taking the expectation over randomness.

Limiting the access to the model's gradients does not work in many cases because many of the adversarial examples are transferable across independent models. Post processing or explainability techniques may add considerable runtime cost and commonly can only detect adversarial examples, while being incapable of classifying the adversarial examples correctly.

In some embodiments, an apparatus, system, or process provides for protections against adversarial samples utilizing preprocessing with dynamic selection of defensive methods. An embodiment may be applied to mitigate the ability of an attacker to create stable adversarial examples with guaranteed misclassification. In this manner, the iterative optimization process that is used to generate the adversarial examples is damaged or eliminated because each time the attacker accesses the classifier the attacker may encounter a different subset of defense strategies. In some embodiments, at inference time a protected inference engine is capable of handling a wide range of adversarial examples correctly. The execution of only a subset of defensive modifications at inference time reduces utilization of runtime and compute resources.

In some embodiments, an apparatus, system, or process for protecting inference systems is based on a concept of a moving target defense. To implement this defense, an inference system is equipped with a dynamic pre-processor block (DPB) that contains a repository of defensive methods (DMR) and a dynamic selector (DS). On each run or iteration of processing, the dynamic selector is to select a subset of defensive preprocessing methods, and to apply these on the classified sample (e.g., an image). In some embodiments, a model training process includes training data augmentation with pre-processed samples.

In some embodiments, a defense method can provide a dramatic improvement over existing defense methodologies, which either use a single method of preprocessing defense (which might not be effective) or combine numerous defensive methods (which is highly resource and runtime consuming).

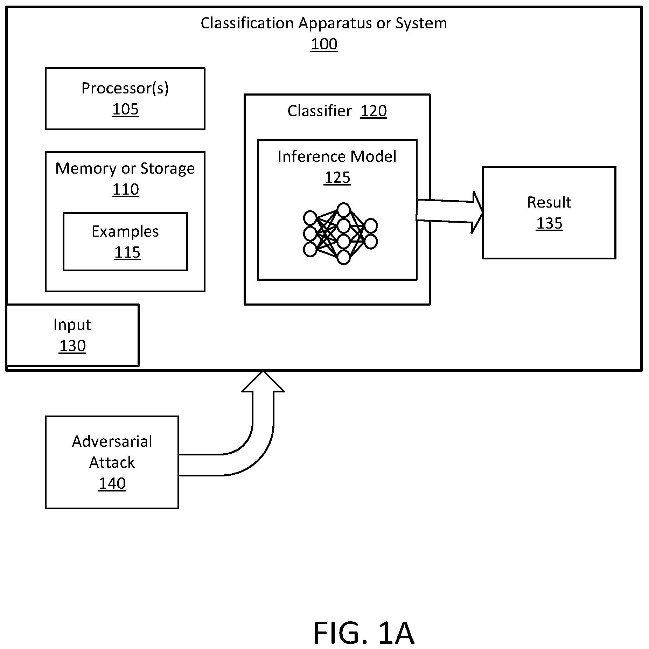

**FIG. 1A** illustrates an example of a machine learning classification system. As shown in FIG. 1A, a classification apparatus or system 100, which may include one or more processors, may receive examples 115 (shown as, for example, being stored in a memory or storage 110) for training of an inference model 125 of a classifier 120.

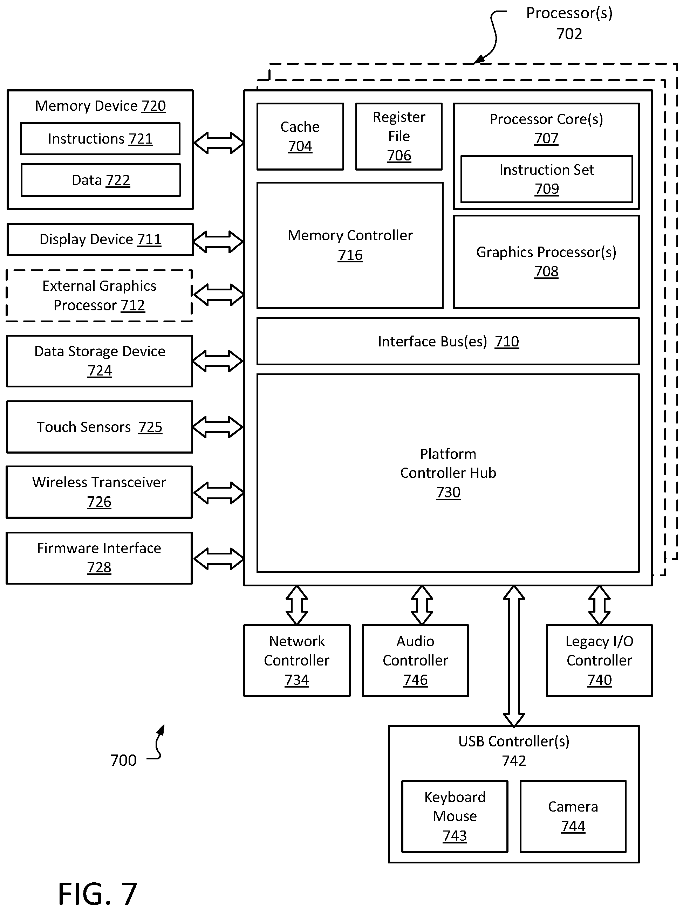

In this high level example, the classification apparatus or system 100 may receive data for classification at an input 130, with the classifier producing a result 135 that classifies the input pursuant to operation of the inference model 125. It is noted that FIG. 1A provides a high level example for illustration of the underlying concepts, and an apparatus or system will include numerous other elements, such as, for example, illustrated in a system as provided in FIG. 7.

However, the classification apparatus or system 100 may be subject to an adversarial attack 140 based on input of adversarial examples that are provided in an attempt to cause the classifier 120 to generate an incorrect result.

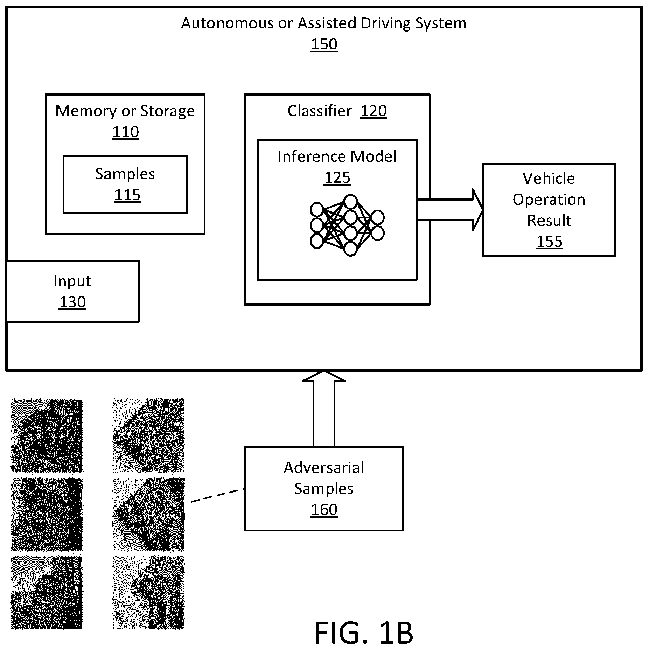

**FIG. 1B** illustrates an example of a machine learning classification system that is under an adversarial attack. As shown in FIG. 1B, a particular classification apparatus or system may include an autonomous or assisted driving system 150 that utilizes a classifier 120 to generate a vehicle operation result 155 (such as navigation, response to traffic control devices or hazards, or any other vehicle operation), which may include piloting a vehicle or otherwise affecting the operation of a vehicle based on the input data that is received.

In particular, the autonomous driving system 150 may have receiving adversarial samples 160, which in this instance are adversarial traffic control device samples that have surreptitiously introduced by an attacking party to trick or spoof the system into producing incorrect vehicle operation results 155.

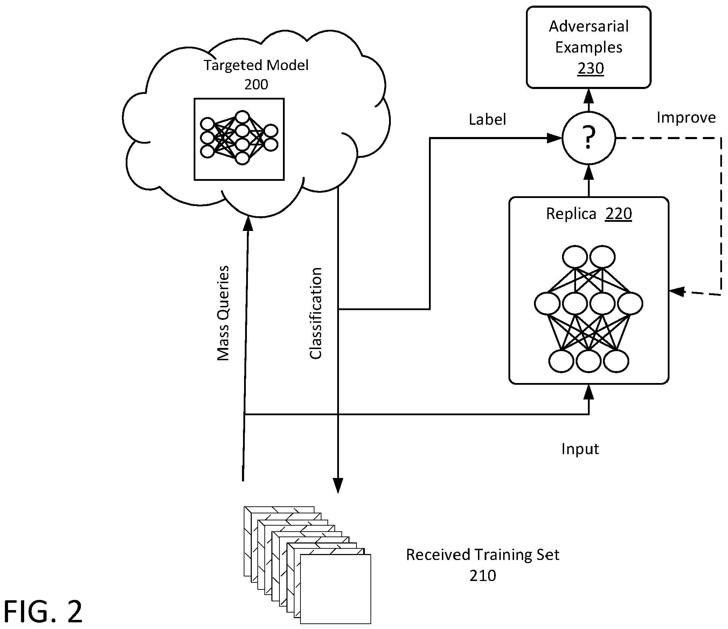

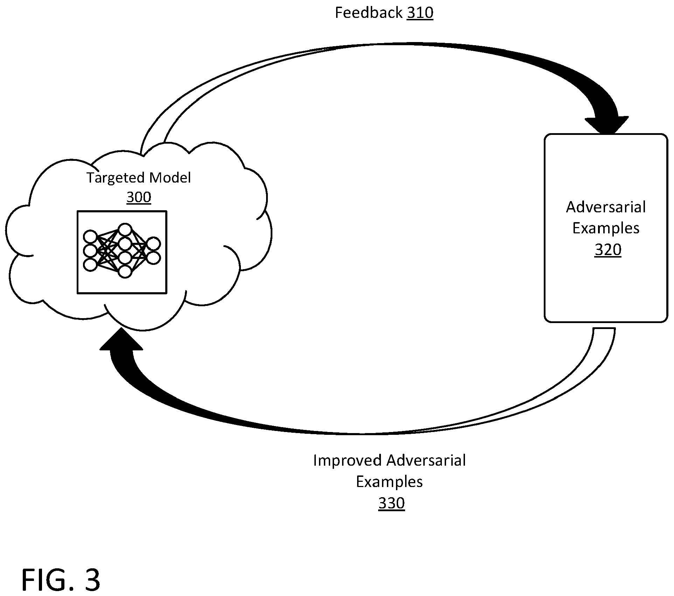

For the generation of the adversarial examples, given black-box only access to the model by an attacker, the attacker can start with a replicated model and utilize the transferability property of adversarial examples (i.e., examples that fool a specific model are likely to fool another model with the same task) through an iterative improvement process. Another option is to use the original model as an oracle and to use many subsequent queries for running an iterative optimization process till the attack is successful. These options are illustrated in FIGS. 2 and 3.

**FIG. 2** illustrates adversarial example generation through use of a replica model. In this process, a targeted model 200 may be observed in response to a received training set 210. As illustrated, mass queries are made (as also occurs in training) to generate classifications.

In this attack process, the queries are utilized as a input to a replica 220 of the target model 200 to generate an output. The resulting labels from the classification may be compared to the output of the replica in the generation of adversarial examples 230. As shown, a feedback loop is utilized to improve the adversarial examples 230 as desired for the intended attack on a classification system.

In addition, **FIG. 3** illustrates adversarial example generation through direct use of a targeted model. FIG. 3 depicts the user of the targeted model 300 in generation of adversarial examples 320. This is shown in terms of oracle access in which a black box (referred to as an oracle) is applied to solve the problem in a single operation. Feedback 310 from the targeted model 300 is received in the generation of the adversarial examples 320, resulting in improved adversarial examples 330 that are provided to the targeted model 300

In some embodiments, an apparatus, system, or process is applied to mitigate the ability of an attacker to generate successful adversarial examples, in both the adversarial example generation through use of a replica model illustrated in FIG. 2 and the adversarial example generation through direct use of a targeted model illustrated in FIG. 3. In some embodiments, a subset of defenses is selected for operation, resulting in different solutions being applied at different times, and thus an optimization process for an attacker is unstable. In an attack operation, after the attacker generates a set of adversarial examples, the samples are used to query the inference engine and attempt to spoof the deployed model. However, with a dynamic processor block selecting varying defenses in operation, the chances of an attack succeeding may be drastically reduced.

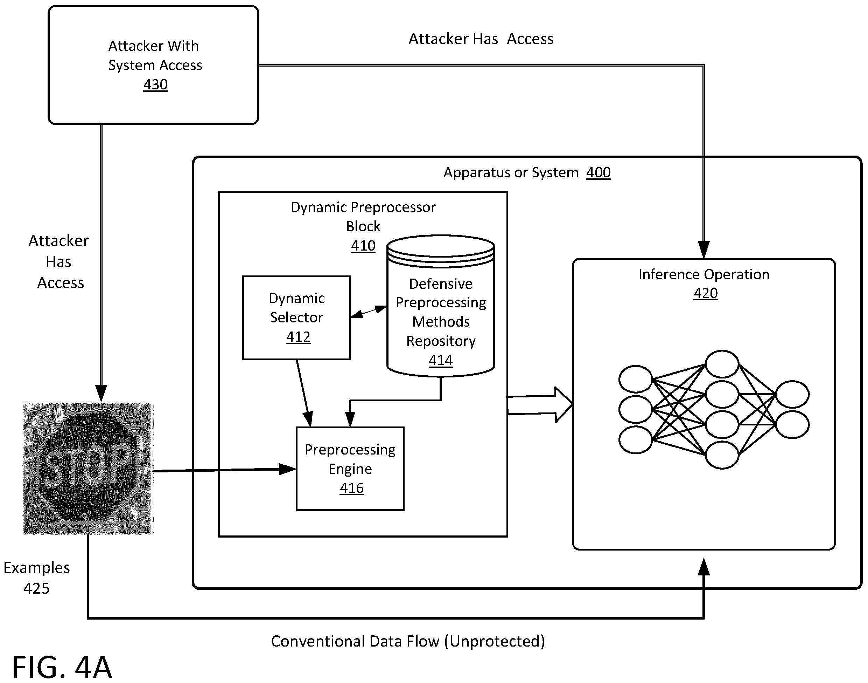

**FIG. 4A** is an illustration of an apparatus or system to provide adversarial sample protection for machine learning, according to some embodiments. In some embodiments, an apparatus or system 400 provides for protecting inference systems based on a concept of a moving target defense that denies an attacker a stable process for attack. As illustrated, the apparatus or system provides circuitry and instructions for inference operation 420 to generate a classification result, wherein the inference operation 420 may be executed by one or more processors. The apparatus or system 400 is shown in a simplified form for ease of illustration, and will include other computing circuitry elements, such as illustrated in FIG. 7.

An attacker having system access 430 may utilize the access to the apparatus or system 400 to introduce examples 425 that may include possible adversarial examples into the training of the inference model, and to access the inference operation 420 in the attack attempt. As shown, the possible adversarial examples 425 may be introduced via the conventional flow, which is generally unprotected. In this way, the attacker is attempting to cause incorrect results in the inference operation 420.

In some embodiments, the apparatus or system 400 performs an inference model training process that includes training data augmentation with pre-processed samples. In some embodiments, the apparatus or system 400 includes a dynamic preprocessor block (DPB) 412 to process examples. The dynamic pre-processor block 410 includes a defensive methods repository (DMR) 414, a dynamic selector (DS) 412, and a preprocessing engine 416. In some embodiments, on each run or iteration of processing, the dynamic selector 412 selects a subset of defensive pre-processing methods from the repository of defensive methods 414 and the preprocessing engine applies the selected subset on a received classified sample 425 (which may include as image). The defensive methods repository 414 is a database of multiple defensive preprocessing methods that may be applied to protect the inference operation 420. The defensive preprocessing methods may include any known preprocessing operation, including, for example, JPEG compression and decompression, DCT (Discrete Cosine Transform) quantization, random distortion, quilting, and semantic feature squeezing, among many others. Each such method on its own may successfully defend against a majority (approximately 60-70%) of independent known attacks, and, when combining a randomized subset of such defenses together, the level of protection can be greatly enhanced. This is in contrast to conventional defense methodologies, which may use a single method of preprocessing (which might not be effective) or combining numerous methods (which may be very expensive in terms of resources and runtime consumption).

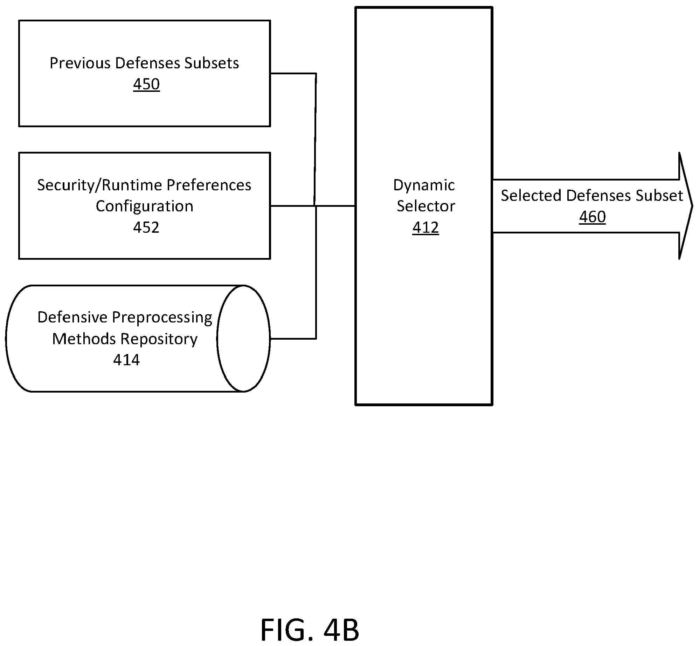

**FIG. 4B** is an illustration of dynamic selector for apparatus or system to provide adversarial samples evasion for machine learning. In some embodiments, the dynamic selector 412 of the dynamic preprocessor block 410, as illustrated in FIG. 4A, is to access information in the selection of defenses, including previous defenses subsets 450 containing previous choices for defense subsets; a security and runtime preference configuration 452 containing information regarding preferences for configuration; and the defensive preprocessing methods repository 414 identifying possible defenses to be incorporated into a defense subset.

In some embodiments, the dynamic selector 412 is responsible for creating a subset of defenses in a smart fashion, utilizing the security and runtime preference configuration 452 to make selections that balance runtime efficiency and defensive strength. Further, the dynamic selector 412 may operate according to a smart policy that:
-- Avoids combining related or similar methods together (e.g., DCT based defense with JPEG based defense; shear and un-shear with other transformation-based methods; etc.)
   - Ensures that sequential queries are assigned different subsets of defenses. This policy makes it more difficult for an attacker to create reliable adversarial examples through the general optimization-based methods because the DPB pipeline is changed for every new operation.

In the application of an embodiment, it is noted that an adversarial operation may operate in two stages: a training stage and an inference stage. In some embodiments, to address a potential attack:

Training Stage: In addition to a main target dataset, the training data may be augmented with adversarial examples that are specifically targeted to overcome known adversarial examples defenses. This stage is provided to ensures that the accuracy of the resulting model isn't harmed because of the defenses. In addition, instead of simply using the feed-forward network in a conventional fashion, the samples go through the full pipeline of the dynamic preprocessor block, in the same way this is utilized in the inference stage.

Inference Stage: The inference stage can be viewed as two modes, from the attacker's point of view: The generation process for the adversarial examples, and the use of the generated samples in an operation. In some embodiments, the ability of an attacker to successfully perform an attack is greatly reduced because the attacker is denied a stable platform to generate adversarial examples, and because the attacker will face an unknown combination of defensive methods in the use of the generated adversarial examples,

In some embodiments, an apparatus, system, or process further includes one or more of the following for further hardening of defenses:
(a) Implementing the dynamic preprocessor block 410 on a trusted execution engine, thereby preventing an attacker from viewing the operations of the dynamic preprocessor block 410 in making a selection of defenses; and
(b) Augmenting the preprocessing defenses at post-deployment, which may be applied in combination with the verifying that the desired accuracy of the inference engine is preserved.

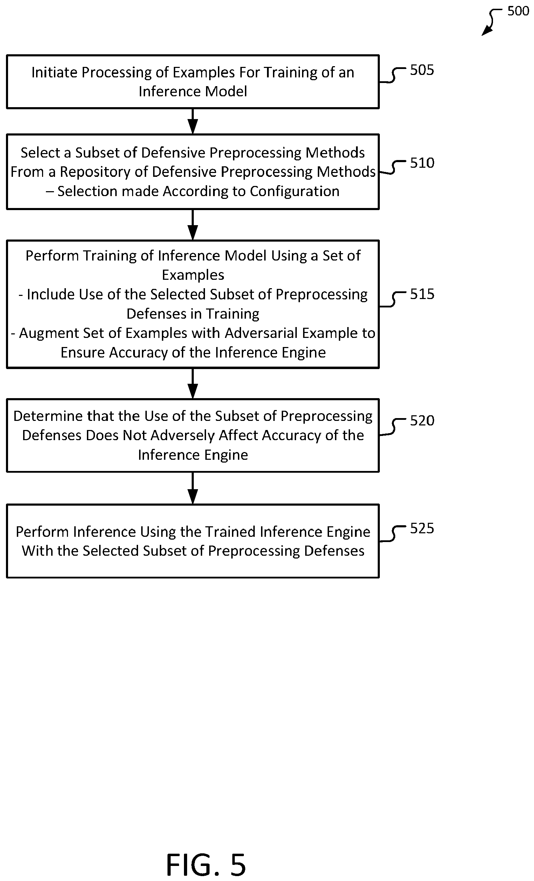

**FIG. 5** is flowchart to illustrate a process for adversarial sample protection for machine learning, according to some embodiments. In some embodiments, a process 500 for providing adversarial sample protection for machine learning includes, upon initiating the processing of examples for training of an inference engine 505, selecting a subset of defensive preprocessing methods from a repository of defensive preprocessing methods 510, wherein a subset of defensive preprocessing methods is selected for each run or iteration of processing. In some embodiments, the selection of the subset of defensive preprocessing methods is made according to security and runtime preferences configuration, wherein the configuration may assist in smart selection of a subset of defensive methods. In some embodiments, the selection includes accessing data regarding previous defenses subsets, which may include, but is not limited to, ensuring that a selected subset of defensive preprocessing methods is different than a subset selected for an immediately previous operation (i.e., the subset selection is different with each new operation). In some embodiments, the selection avoids combining related or similar defensive preprocessing methods together.

In some embodiments, the process 500 may include training the inference model using a set of examples 515. In some embodiments, the training includes use of the selected subset of preprocessing defenses. In some embodiments, the training further includes augmenting the set of examples with one or more adversarial examples that are specifically targeted to overcome known adversarial examples defenses to assist in evaluating the performance of the inference engine.

In some embodiments, a determination may be made whether the implementation of the subset of defenses does not adversely affect the accuracy of the inference engine 520. If an issue is detected, then a different or modified subset of preprocessing defenses may be selected. The process 500 then may proceed with performing inference operation utilizing the selected subset of preprocessing defenses 525, with the defenses being employed to reduce the likelihood of a successful adversarial attack on the inference system.

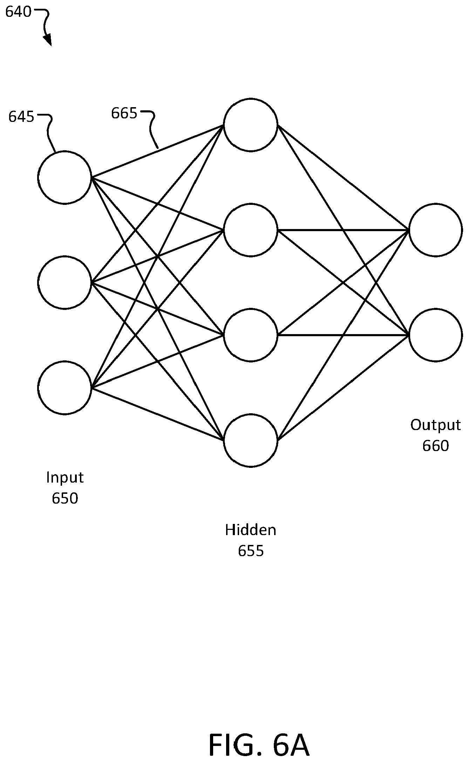

**FIG. 6A** is an illustration of a neural network that may be processed according to some embodiments. As illustrated in FIG. 6A, a neural network 640, such as neural network in a classifier apparatus or system, includes a collection of connected units or nodes 645, also referred to as artificial neurons. Typically, nodes are arranged in multiple layers. Different layers may perform different transformations on their inputs. In this simplified illustration the neural network includes the nodes in layers that include an input layer 650, one or more hidden layers 655, and an output layer 660. Each connection (or edge) 665 can transmit a signal to other nodes 645. A node 645 that receives a signal may then process it and signal nodes connected to it. The nodes and edges typically have a weight that adjusts as learning proceeds.

Neural networks, including feedforward networks, CNNs (Convolutional Neural Networks, and RNNs (Recurrent Neural Networks) networks, may be used to perform deep learning. Deep learning refers to machine learning using deep neural networks. The deep neural networks used in deep learning are artificial neural networks composed of multiple hidden layers, as opposed to shallow neural networks that include only a single hidden layer. Deeper neural networks are generally more computationally intensive to train. However, the additional hidden layers of the network enable multistep pattern recognition that results in reduced output error relative to shallow machine learning techniques.

Deep neural networks used in deep learning typically include a front-end network to perform feature recognition coupled to a back-end network which represents a mathematical model that can perform operations (e.g., object classification, speech recognition, etc.) based on the feature representation provided to the model. Deep learning enables machine learning to be performed without requiring hand crafted feature engineering to be performed for the model. Instead, deep neural networks can learn features based on statistical structure or correlation within the input data. The learned features can be provided to a mathematical model that can map detected features to an output. The mathematical model used by the network is generally specialized for the specific task to be performed, and different models will be used to perform different task.

Once the neural network is structured, a learning model can be applied to the network to train the network to perform specific tasks. The learning model describes how to adjust the weights within the model to reduce the output error of the network. Backpropagation of errors is a common method used to train neural networks. An input vector is presented to the network for processing. The output of the network is compared to the desired output using a loss function and an error value is calculated for each of the neurons in the output layer. The error values are then propagated backwards until each neuron has an associated error value which roughly represents its contribution to the original output. The network can then learn from those errors using an algorithm, such as the stochastic gradient descent algorithm, to update the weights of the of the neural network.

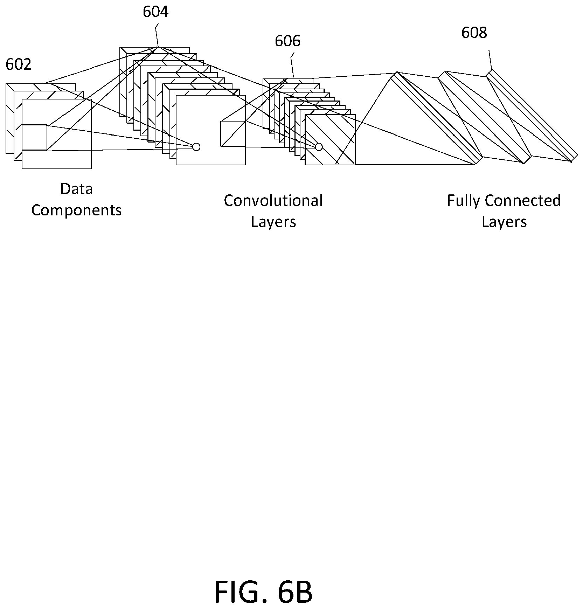

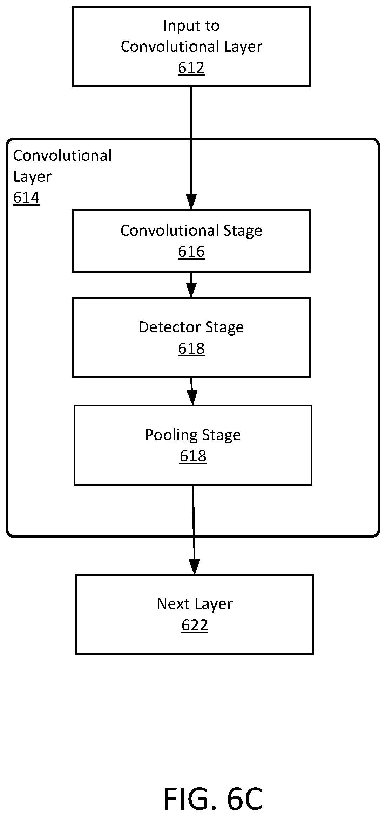

**FIGS. 6B** **and** **6C** illustrate an example of a neural network that may be processed according to some embodiments. FIG. 6B illustrates various layers within a CNN as a specific neural network example. However, embodiments are not limited to a particular type of neural network. As shown in FIG. 6B, an exemplary neural network used to, for example, model image processing can receive input 602 describing, for example, the red, green, and blue (RGB) components of an input image (or any other relevant data for processing). The input 602 can be processed in this example by multiple convolutional layers (e.g., convolutional layer 604 and convolutional layer 606). The output from the multiple convolutional layers may optionally be processed by a set of fully connected layers 608. Neurons in a fully connected layer have full connections to all activations in the previous layer, as previously described for a feedforward network. The output from the fully connected layers 608 can be used to generate an output result from the network. The activations within the fully connected layers 608 can be computed using matrix multiplication instead of convolution. Not all CNN implementations make use of fully connected layers 608. For example, in some implementations the convolutional layer 606 can generate output for the CNN

FIG. 6C illustrates exemplary computation stages within a convolutional layer of a CNN. Input to a convolutional layer 612 of a CNN can be processed in three stages of a convolutional layer 614. The three stages can include a convolution stage 616, a detector stage 618, and a pooling stage 620. The convolution layer 614 can then output data to a successive convolutional layer 622. The final convolutional layer of the network can generate output feature map data or provide input to a fully connected layer, for example, to generate a classification value for the input to the CNN

In the convolution stage 616 several convolutions may be performed in parallel to produce a set of linear activations. The convolution stage 616 can include an affine transformation, which is any transformation that can be specified as a linear transformation plus a translation. Affine transformations include rotations, translations, scaling, and combinations of these transformations. The convolution stage computes the output of functions (e.g., neurons) that are connected to specific regions in the input, which can be determined as the local region associated with the neuron. The neurons compute a dot product between the weights of the neurons and the region in the local input to which the neurons are connected. The output from the convolution stage 616 defines a set of linear activations that are processed by successive stages of the convolutional layer 614.

The linear activations can be processed by a detector stage 618. In the detector stage 618, each linear activation is processed by a non-linear activation function. The non-linear activation function increases the nonlinear properties of the overall network without affecting the receptive fields of the convolution layer. Several types of non-linear activation functions may be used. One particular type is the rectified linear unit (ReLU), which uses an activation function defined such that the activation is thresholded at zero.

The pooling stage 620 uses a pooling function that replaces the output of the convolutional layer 606 with a summary statistic of the nearby outputs. The pooling function can be used to introduce translation invariance into the neural network, such that small translations to the input do not change the pooled outputs. Invariance to local translation can be useful in scenarios where the presence of a feature in the input data is more important than the precise location of the feature. Various types of pooling functions can be used during the pooling stage 620, including max pooling, average pooling, and 12-norm pooling. Additionally, some CNN implementations do not include a pooling stage. Instead, such implementations substitute and additional convolution stage having an increased stride relative to previous convolution stages.

The output from the convolutional layer 614 can then be processed by the next layer 622. The next layer 622 can be an additional convolutional layer or one of the fully connected layers 608. For example, the first convolutional layer 604 of FIG. 6B can output to the second convolutional layer 606, while the second convolutional layer can output to a first layer of the fully connected layers 608.

**FIG. 7** illustrates an embodiment of an exemplary computing architecture for adversarial sample protection for machine learning, according to some embodiments. In various embodiments as described above, a computing architecture 700 may comprise or be implemented as part of an electronic device. In some embodiments, the computing architecture 700 may be representative, for example, of a computer system that implements one or more components of the operating environments described above. The computing architecture 700 may be utilized to provide adversarial sample protection for machine learning, such as described in FIGS. 1A-5.

As used in this application, the terms "system" and "component" and "module" are intended to refer to a computer-related entity, either hardware, a combination of hardware and software, software, or software in execution, examples of which are provided by the exemplary computing architecture 700. For example, a component can be, but is not limited to being, a process running on a processor, a processor, a hard disk drive or solid state drive (SSD), multiple storage drives (of optical and/or magnetic storage medium), an object, an executable, a thread of execution, a program, and/or a computer. By way of illustration, both an application running on a server and the server can be a component. One or more components can reside within a process and/or thread of execution, and a component can be localized on one computer and/or distributed between two or more computers. Further, components may be communicatively coupled to each other by various types of communications media to coordinate operations. The coordination may involve the unidirectional or bi-directional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. Exemplary connections include parallel interfaces, serial interfaces, and bus interfaces.

The computing architecture 700 includes various common computing elements, such as one or more processors, multi-core processors, co-processors, memory units, chipsets, controllers, peripherals, interfaces, oscillators, timing devices, video cards, audio cards, multimedia input/output (I/O) components, power supplies, and so forth. The embodiments, however, are not limited to implementation by the computing architecture 700.

As shown in FIG. 7, the computing architecture 700 includes one or more processors 702 and one or more graphics processors 708, and may be a single processor desktop system, a multiprocessor workstation system, or a server system having a large number of processors 702 or processor cores 707. In one embodiment, the system 700 is a processing platform incorporated within a system-on-a-chip (SoC or SOC) integrated circuit for use in mobile, handheld, or embedded devices.

An embodiment of system 700 can include, or be incorporated within, a server-based gaming platform, a game console, including a game and media console, a mobile gaming console, a handheld game console, or an online game console. In some embodiments system 700 is a mobile phone, smart phone, tablet computing device or mobile Internet device. Data processing system 700 can also include, couple with, or be integrated within a wearable device, such as a smart watch wearable device, smart eyewear device, augmented reality device, or virtual reality device. In some embodiments, data processing system 700 is a television or set top box device having one or more processors 702 and a graphical interface generated by one or more graphics processors 708.

In some embodiments, the one or more processors 702 each include one or more processor cores 707 to process instructions which, when executed, perform operations for system and user software. In some embodiments, each of the one or more processor cores 707 is configured to process a specific instruction set 709. In some embodiments, instruction set 709 may facilitate Complex Instruction Set Computing (CISC), Reduced Instruction Set Computing (RISC), or computing via a Very Long Instruction Word (VLIW). Multiple processor cores 707 may each process a different instruction set 709, which may include instructions to facilitate the emulation of other instruction sets. Processor core 707 may also include other processing devices, such a Digital Signal Processor (DSP).

In some embodiments, the processor 702 includes cache memory 704. Depending on the architecture, the processor 702 can have a single internal cache or multiple levels of internal cache. In some embodiments, the cache memory 704 is shared among various components of the processor 702. In some embodiments, the processor 702 also uses an external cache (e.g., a Level-3 (L3) cache or Last Level Cache (LLC)) (not shown), which may be shared among processor cores 707 using known cache coherency techniques. A register file 706 is additionally included in processor 702 which may include different types of registers for storing different types of data (e.g., integer registers, floating point registers, status registers, and an instruction pointer register). Some registers may be general-purpose registers, while other registers may be specific to the design of the processor 702.

In some embodiments, one or more processor(s) 702 are coupled with one or more interface bus(es) 710 to transmit communication signals such as address, data, or control signals between processor 702 and other components in the system. The interface bus 710, in one embodiment, can be a processor bus, such as a version of the Direct Media Interface (DMI) bus. However, processor buses are not limited to the DMI bus, and may include one or more Peripheral Component Interconnect buses (e.g., PCI, PCI Express), memory buses, or other types of interface buses. In one embodiment the processor(s) 702 include an integrated memory controller 716 and a platform controller hub 730. The memory controller 716 facilitates communication between a memory device and other components of the system 700, while the platform controller hub (PCH) 730 provides connections to I/O devices via a local I/O bus.

Memory device 720 can be a dynamic random-access memory (DRAM) device, a static random-access memory (SRAM) device, non-volatile memory device such as flash memory device or phase-change memory device, or some other memory device having suitable performance to serve as process memory. Memory device 720 may further include non-volatile memory elements for storage of firmware. In one embodiment the memory device 720 can operate as system memory for the system 700, to store data 722 and instructions 721 for use when the one or more processors 702 execute an application or process. Memory controller hub 716 also couples with an optional external graphics processor 712, which may communicate with the one or more graphics processors 708 in processors 702 to perform graphics and media operations. In some embodiments a display device 711 can connect to the processor(s) 702. The display device 711 can be one or more of an internal display device, as in a mobile electronic device or a laptop device, or an external display device attached via a display interface (e.g., DisplayPort, etc.). In one embodiment the display device 711 can be a head mounted display (HMD) such as a stereoscopic display device for use in virtual reality (VR) applications or augmented reality (AR) applications.

In some embodiments the platform controller hub 730 enables peripherals to connect to memory device 720 and processor 702 via a high-speed I/O bus. The I/O peripherals include, but are not limited to, an audio controller 746, a network controller 734, a firmware interface 728, a wireless transceiver 726, touch sensors 725, a data storage device 724 (e.g., hard disk drive, flash memory, etc.). The data storage device 724 can connect via a storage interface (e.g., SATA) or via a peripheral bus, such as a Peripheral Component Interconnect bus (e.g., PCI, PCI Express). The touch sensors 725 can include touch screen sensors, pressure sensors, or fingerprint sensors. The wireless transceiver 726 can be a Wi-Fi transceiver, a Bluetooth transceiver, or a mobile network transceiver such as a 3G, 4G, Long Term Evolution (LTE), or 5G transceiver. The firmware interface 728 enables communication with system firmware, and can be, for example, a unified extensible firmware interface (UEFI). The network controller 734 can enable a network connection to a wired network. In some embodiments, a highperformance network controller (not shown) couples with the interface bus 710. The audio controller 746, in one embodiment, is a multi-channel high definition audio controller. In one embodiment the system 700 includes an optional legacy I/O controller 740 for coupling legacy (e.g., Personal System 2 (PS/2)) devices to the system. The platform controller hub 730 can also connect to one or more Universal Serial Bus (USB) controllers 742 connect input devices, such as keyboard and mouse 743 combinations, a camera 744, or other USB input devices.

In the description above, for the purposes of explanation, numerous specific details are set forth in order to provide a thorough understanding of the described embodiments. It will be apparent, however, to one skilled in the art that embodiments may be practiced without some of these specific details. In other instances, well-known structures and devices are shown in block diagram form. There may be intermediate structure between illustrated components. The components described or illustrated herein may have additional inputs or outputs that are not illustrated or described.

Various embodiments may include various processes. These processes may be performed by hardware components or may be embodied in computer program or machine-executable instructions, which may be used to cause a general-purpose or special-purpose processor or logic circuits programmed with the instructions to perform the processes. Alternatively, the processes may be performed by a combination of hardware and software.

Portions of various embodiments may be provided as a computer program product, which may include a computer-readable medium, including a non-transitory medium, having stored thereon computer program instructions, which may be used to program a computer (or other electronic devices) for execution by one or more processors to perform a process according to certain embodiments. The computer-readable medium may include, but is not limited to, magnetic disks, optical disks, read-only memory (ROM), random access memory (RAM), erasable programmable read-only memory (EPROM), electrically-erasable programmable read-only memory (EEPROM), magnetic or optical cards, flash memory, or other type of computer-readable medium suitable for storing electronic instructions. Moreover, embodiments may also be downloaded as a computer program product, wherein the program may be transferred from a remote computer to a requesting computer.

Many of the methods are described in their most basic form, but processes can be added to or deleted from any of the methods and information can be added or subtracted from any of the described messages without departing from the basic scope of the present embodiments. It will be apparent to those skilled in the art that many further modifications and adaptations can be made. The particular embodiments are not provided to limit the concept but to illustrate it. The scope of the embodiments is not to be determined by the specific examples provided above but only by the claims below.

If it is said that an element "A" is coupled to or with element "B," element A may be directly coupled to element B or be indirectly coupled through, for example, element C. When the specification or claims state that a component, feature, structure, process, or characteristic A "causes" a component, feature, structure, process, or characteristic B, it means that "A" is at least a partial cause of "B" but that there may also be at least one other component, feature, structure, process, or characteristic that assists in causing "B." If the specification indicates that a component, feature, structure, process, or characteristic "may", "might", or "could" be included, that particular component, feature, structure, process, or characteristic is not required to be included. If the specification or claim refers to "a" or "an" element, this does not mean there is only one of the described elements.

An embodiment is an implementation or example. Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. It should be appreciated that in the foregoing description of exemplary embodiments, various features are sometimes grouped together in a single embodiment, figure, or description thereof for the purpose of streamlining the disclosure and aiding in the understanding of one or more of the various novel aspects. This method of disclosure, however, is not to be interpreted as reflecting an intention that the claimed embodiments requires more features than are expressly recited in each claim. Rather, as the following claims reflect, novel aspects lie in less than all features of a single foregoing disclosed embodiment. Thus, the claims are hereby expressly incorporated into this description, with each claim standing on its own as a separate embodiment.

The foregoing description and drawings are to be regarded in an illustrative rather than a restrictive sense. Persons skilled in the art will understand that various modifications and changes may be made to the embodiments described herein without departing from the broader spirit and scope of the features set forth in the appended claims.

The following Examples pertain to certain embodiments:
In Example 1, a non-transitory storage medium includes instructions for initiating processing of examples for training of an inference engine in a system; dynamically selecting a subset of defensive preprocessing methods from a repository of defensive preprocessing methods for a current iteration of processing, wherein a subset of defensive preprocessing methods is selected for each iteration of processing; performing training of the inference engine with a plurality of examples, wherein the training of the inference engine include operation of the selected subset of defensive preprocessing methods; and performing an inference operation with the inference engine, including utilizing the selected subset of preprocessing defenses for the current iteration of processing.

In Example 2, selecting the subset of defensive preprocessing methods includes selecting the subset based at least in part on a security and runtime preferences configuration.

In Example 3, selecting the subset of defensive preprocessing methods includes selecting a different subset of defensive preprocessing methods than a subset selected for an immediately previous operation.

In Example 4, selecting the subset of defensive preprocessing methods includes selecting a subset that does not includes multiple related defensive preprocessing methods.

In Example 5, performing training of the inference engine includes augmenting the plurality of examples with one or more adversarial examples.

In Example 6, the instructions further include instructions for determining whether the selected subset of defensive preprocessing methods adversely affects accuracy of the inference engine.

In Example 7, the system is an autonomous or assisted driving system.

In Example 8, an apparatus includes one or more processors to process data, including processing of an inference engine; and a storage to store data, including a plurality of examples for training of the inference engine; wherein the one or more processors are to initiate training of the inference engine; dynamically select a subset of defensive preprocessing methods from the repository of defensive preprocessing methods for a current iteration of processing, wherein a subset of defensive preprocessing methods is selected for each iteration of processing; perform training of the inference engine with the plurality of examples, wherein the training of the inference engine include operation of the selected subset of defensive preprocessing methods; and performing an inference operation with the inference engine, including utilizing the selected subset of preprocessing defenses for the current iteration of processing.

In Example 9, selecting the subset of defensive preprocessing methods includes selecting the subset based at least in part on a security and runtime preferences configuration.

In Example 10, selecting the subset of defensive preprocessing methods includes selecting a different subset of defensive preprocessing methods than a subset selected for an immediately previous operation.

In Example 11, selecting the subset of defensive preprocessing methods includes selecting a subset that does not includes multiple related defensive preprocessing methods.

In Example 12, performing training of the inference engine includes augmenting the plurality of examples with one or more adversarial examples.

In Example 13, the apparatus is further to determine whether the selected subset of defensive preprocessing methods adversely affects accuracy of the inference engine.

In Example 14, he apparatus is an autonomous or assisted driving vehicle.

In Example 15, a method includes initiating processing of examples for training of an inference engine in a system; dynamically selecting a subset of defensive preprocessing methods from a repository of defensive preprocessing methods for a current iteration of processing, wherein a subset of defensive preprocessing methods is selected for each iteration of processing; performing training of the inference engine with a plurality of examples, wherein the training of the inference engine include operation of the selected subset of defensive preprocessing methods; and performing an inference operation with the inference engine, including utilizing the selected subset of preprocessing defenses for the current iteration of processing.

In Example 16, selecting the subset of defensive preprocessing methods includes selecting the subset based at least in part on a security and runtime preferences configuration.

In Example 17, selecting the subset of defensive preprocessing methods includes selecting a different subset of defensive preprocessing methods than a subset selected for an immediately previous operation.

In Example 18, selecting the subset of defensive preprocessing methods includes selecting a subset that does not includes multiple related defensive preprocessing methods.

In Example 19, performing training of the inference engine includes augmenting the plurality of examples with one or more adversarial examples.

In Example 20, the method further includes determining whether the selected subset of defensive preprocessing methods adversely affects accuracy of the inference engine.

In Example 21, an apparatus includes means for initiating processing of examples for training of an inference engine in a system; means for dynamically selecting a subset of defensive preprocessing methods from a repository of defensive preprocessing methods for a current iteration of processing, wherein a subset of defensive preprocessing methods is selected for each iteration of processing; means for performing training of the inference engine with a plurality of examples, wherein the training of the inference engine include operation of the selected subset of defensive preprocessing methods; and means for performing an inference operation with the inference engine, including utilizing the selected subset of preprocessing defenses for the current iteration of processing.

In Example 22, the means for selecting the subset of defensive preprocessing methods includes means for selecting the subset based at least in part on a security and runtime preferences configuration.

In Example 23, the means for selecting the subset of defensive preprocessing methods includes means for selecting a different subset of defensive preprocessing methods than a subset selected for an immediately previous operation.

In Example 24, the means for selecting the subset of defensive preprocessing methods includes means for selecting a subset that does not includes multiple related defensive preprocessing methods.

In Example 25, the means for performing training of the inference engine includes means for augmenting the plurality of examples with one or more adversarial examples.

In Example 26, the apparatus further includes means for determining whether the selected subset of defensive preprocessing methods adversely affects accuracy of the inference engine.

In Example 27, the system is an autonomous or assisted driving system.

In the description above, for the purposes of explanation, numerous specific details are set forth in order to provide a thorough understanding of the described embodiments. It will be apparent, however, to one skilled in the art that embodiments may be practiced without some of these specific details. In other instances, well-known structures and devices are shown in block diagram form. There may be intermediate structure between illustrated components. The components described or illustrated herein may have additional inputs or outputs that are not illustrated or described.

Various embodiments may include various processes. These processes may be performed by hardware components or may be embodied in computer program or machine-executable instructions, which may be used to cause a general-purpose or special-purpose processor or logic circuits programmed with the instructions to perform the processes. Alternatively, the processes may be performed by a combination of hardware and software.

Portions of various embodiments may be provided as a computer program product, which may include a computer-readable medium having stored thereon computer program instructions, which may be used to program a computer (or other electronic devices) for execution by one or more processors to perform a process according to certain embodiments. The computer-readable medium may include, but is not limited to, magnetic disks, optical disks, read-only memory (ROM), random access memory (RAM), erasable programmable read-only memory (EPROM), electrically-erasable programmable read-only memory (EEPROM), magnetic or optical cards, flash memory, or other type of computer-readable medium suitable for storing electronic instructions. Moreover, embodiments may also be downloaded as a computer program product, wherein the program may be transferred from a remote computer to a requesting computer.

Many of the methods are described in their most basic form, but processes can be added to or deleted from any of the methods and information can be added or subtracted from any of the described messages without departing from the basic scope of the present embodiments. It will be apparent to those skilled in the art that many further modifications and adaptations can be made. The particular embodiments are not provided to limit the concept but to illustrate it. The scope of the embodiments is not to be determined by the specific examples provided above but only by the claims below.

If it is said that an element "A" is coupled to or with element "B," element A may be directly coupled to element B or be indirectly coupled through, for example, element C. When the specification or claims state that a component, feature, structure, process, or characteristic A "causes" a component, feature, structure, process, or characteristic B, it means that "A" is at least a partial cause of "B" but that there may also be at least one other component, feature, structure, process, or characteristic that assists in causing "B." If the specification indicates that a component, feature, structure, process, or characteristic "may", "might", or "could" be included, that particular component, feature, structure, process, or characteristic is not required to be included. If the specification or claim refers to "a" or "an" element, this does not mean there is only one of the described elements.

An embodiment is an implementation or example. Reference in the specification to "an embodiment," "one embodiment," "some embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. It should be appreciated that in the foregoing description of exemplary embodiments, various features are sometimes grouped together in a single embodiment, figure, or description thereof for the purpose of streamlining the disclosure and aiding in the understanding of one or more of the various novel aspects. This method of disclosure, however, is not to be interpreted as reflecting an intention that the claimed embodiments requires more features than are expressly recited in each claim. Rather, as the following claims reflect, novel aspects lie in less than all features of a single foregoing disclosed embodiment. Thus, the claims are hereby expressly incorporated into this description, with each claim standing on its own as a separate embodiment.

The foregoing description and drawings are to be regarded in an illustrative rather than a restrictive sense. Persons skilled in the art will understand that various modifications and changes may be made to the embodiments described herein without departing from the broader spirit and scope of the features set forth in the appended claims.

## Claims

1. One or more non-transitory computer-readable storage mediums having stored thereon executable computer program instructions that, when executed by one or more processors, cause the one or more processors to perform operations comprising:
initiating processing of examples for training of an inference engine in a system;
dynamically selecting a current subset of defensive preprocessing methods from a repository of defensive preprocessing methods for a current iteration of processing, wherein a subset of defensive preprocessing methods is selected for each iteration of processing;
performing training of the inference engine with a plurality of examples, wherein the training of the inference engine include operation of the selected subset of defensive preprocessing methods; and
performing an inference operation with the inference engine, including utilizing the selected subset of preprocessing defenses for the current iteration of processing.

2. The storage mediums of claim 1, wherein selecting the subset of defensive preprocessing methods includes selecting the subset based at least in part on a security and runtime preferences configuration.

3. The storage mediums of claim 2, wherein selecting the subset of defensive preprocessing methods includes either:
selecting a different subset of defensive preprocessing methods than a subset selected for an immediately previous operation; or
selecting a subset that does not includes multiple related defensive preprocessing methods.

4. The storage mediums of claim 1, wherein performing training of the inference engine includes augmenting the plurality of examples with one or more adversarial examples.

5. The storage mediums of claim 4, wherein the instructions further include instructions for:
determining whether the selected subset of defensive preprocessing methods adversely affects accuracy of the inference engine.

6. An apparatus comprising:
one or more processors to process data, including processing of an inference engine; and
a storage to store data, including a plurality of examples for training of the inference engine; and
wherein the one or more processors are to:
initiate training of the inference engine;
dynamically select a subset of defensive preprocessing methods from a repository of defensive preprocessing methods for a current iteration of processing, wherein a subset of defensive preprocessing methods is selected for each iteration of processing;
perform training of the inference engine with the plurality of examples, wherein the training of the inference engine include operation of the selected subset of defensive preprocessing methods; and
performing an inference operation with the inference engine, including utilizing the selected subset of preprocessing defenses for the current iteration of processing.

7. The apparatus of claim 6, wherein selecting the subset of defensive preprocessing methods includes selecting the subset based at least in part on a security and runtime preferences configuration.

8. The apparatus of claim 7, wherein selecting the subset of defensive preprocessing methods includes either:
selecting a different subset of defensive preprocessing methods than a subset selected for an immediately previous operation; or
selecting a subset that does not includes multiple related defensive preprocessing methods.

9. The apparatus of claim 6, wherein performing training of the inference engine includes augmenting the plurality of examples with one or more adversarial examples.

10. The apparatus of claim 9, wherein the apparatus is further to:
determine whether the selected subset of defensive preprocessing methods adversely affects accuracy of the inference engine.

11. The apparatus of claim 6, wherein the apparatus is an autonomous or assisted driving vehicle.

12. A method comprising:
initiating processing of examples for training of an inference engine in a system;
dynamically selecting a subset of defensive preprocessing methods from a repository of defensive preprocessing methods for a current iteration of processing, wherein a subset of defensive preprocessing methods is selected for each iteration of processing;
performing training of the inference engine with a plurality of examples, wherein the training of the inference engine include operation of the selected subset of defensive preprocessing methods; and
performing an inference operation with the inference engine, including utilizing the selected subset of preprocessing defenses for the current iteration of processing.

13. The method of claim 12, wherein selecting the subset of defensive preprocessing methods includes selecting the subset based at least in part on a security and runtime preferences configuration.

14. The method of claim 13, wherein selecting the subset of defensive preprocessing methods includes either:
selecting a different subset of defensive preprocessing methods than a subset selected for an immediately previous operation; or
selecting a subset that does not includes multiple related defensive preprocessing methods.

15. The method of claim 12, wherein performing training of the inference engine includes augmenting the plurality of examples with one or more adversarial examples; and
further comprising determining whether the selected subset of defensive preprocessing methods adversely affects accuracy of the inference engine.
